Europäisches Patentamt

European Patent Office

Office européen des brevets

(19)

(11) Veröffentlichungsnummer: **0 277 955**
**B1**

(12)  **EUROPÄISCHE PATENTSCHRIFT**

(45) Veröffentlichungstag der Patentschrift: **16.08.90**

(51) Int. Cl.⁵: **F 02 D 41/22,** F 02 D 41/28

(21) Anmeldenummer: **87901023.9**

(22) Anmeldetag: **05.02.87**

(86) Internationale Anmeldenummer:
**PCT/DE87/00044**

(87) Internationale Veröffentlichungsnummer:
**WO 88/00286 14.01.88 Gazette 88/02**

(54) **ÜBERWACHUNGSEINRICHTUNG FÜR EINE ELEKTRONISCHE STEUEREINRICHTUNG IN EINEM KRAFTFAHRZEUG.**

(30) Priorität: **30.06.86 DE 3621937**

(43) Veröffentlichungstag der Anmeldung:
**17.08.88 Patentblatt 88/33**

(45) Bekanntmachung des Hinweises auf die
Patenterteilung:
**16.08.90 Patentblatt 90/33**

(84) Benannte Vertragsstaaten:
**DE FR IT**

(56) Entgegenhaltungen:
**EP-A-0 060 326**
**GB-A-2 130 749**
**GB-A-2 133 906**
**US-A-4 589 401**

(73) Patentinhaber: **ROBERT BOSCH GMBH**
**Postfach 50**
**D-7000 Stuttgart 1 (DE)**

(72) Erfinder: **PETER, Cornelius**
**Burg-Windeck-Str. 35**
**D-7583 Ottersweier (DE)**
Erfinder: **PREIS, Karl-Heinrich**
**Holzmattweg 6a**
**D-7582 Bühlertal (DE)**

**Beschreibung**

Stand der Technik

Die Erfindung geht aus von einer Einrichtung nach der GB—A—2 130 749.

Aus der DE—OS 31 09 638 ist eine Überwachungs- und Schutzeinrichtung für Steuerschaltungsanordnungen in Kraftfahrzeugen, insbesondere für ein sogenanntes "elektronisches Gaspedal", bekannt. Diese sieht einen besonderen Programmspeicher vor, dessen Ausgang mit einem Signalgeber in Verbindung steht, dessen Adresseingänge mit zu überwachenden Potentialpunkten der Steuerschaltung in Verbindung stehen und in dem für eine erste Gruppe von Adressen ein erstes Ausgangssignal und für eine zweite Gruppe von Adressen ein zweites Ausgangssignal zugeordnet ist.

Diese bekannte Anordnung weist jedoch einen ganz erheblichen Nachteil auf insoweit, als sie zunächst einmal für jeden zu überwachenden Potentialpunkt einen besonderen Analog/Digital-(A/D)-Wandler oder zumindest einen besonderen, multiplexbaren A/D-Eingangskanal erfordert, ansonsten die an überwachenden Spannungen gar nicht in Form von Dualzahlen diskriminiert und gespeichert werden können. Da nun aber den besondere Programmspeicher selbst keine Rechenoperation ausführt, etwa die Abwicklung einer programmgesteuerten Routine zur Prüfung der Potentiale auf Lage zwischen vorgegebenen Zulässigkeitsschranken, müssen dem besonderen Programmspeicher besondere Diskriminiatoren zur Signalaufbereitung vorgeschaltet werden, wie das in jener Schrift auch durch den Diskriminator 22 versinnbildlicht ist.

Jene Einrichtung benötigt also ganz anders, als sie zunächst den Anschein erweckt, eine Vielzahl zusätzlicher Komponenten, um die beschriebenen Überprüfungs- und Schutzfunktionen für den dort gezeigten Regelkreis überhaupt erfüllen zu können. Diese Komponenten sind einerseits teuer und unterliegen andererseits auch der Gefahr, selbst auszufallen, wodurch eine Steigerung der Systemverfügbarkeit und Sicherheit nur in begrenztem Rahmen möglich ist.

Aus der GB—A—21 30 749 ist ein Luftmengenmesser bekannt, der zur Bestimmung der angesaugten Luftemenge einem Rechner ein Referenzsignal und ein Meßsignal zuführt. Zur Fehlerüberwachung wird im Rechner der Referenzwert mit vorgegebenen Grenzwerten verglichen und ein Fehler erkannt, wenn das Referenzsignal diese vorgegebenen Grenzwerte überschreitet.

Die Aufgabe der vorliegenden Erfindung besteht nun darin, eine überwachungseinrichtung für eine elektronische Kraftstoffzumeßeinrichtung in einem Kraftfahrzeug vorzuschlagen, die insbesondere die kontinuierliche Überprüfung der Stellungsgeber eines solchen Systems mit hoher Sicherheit leistet.

Eine weitere Aufgabe der vorliegenden Erfindung ist, eine entsprechende Einrichtung tatsächlich mit einer minimalen Anzahl zusätzlicher Komponenten zu realisieren so, daß sie insbesondere in ein modernes, voll digital wirkendes Steuergerät vorteilhaft integriert werden kann.

Diese Aufgaben werden gelöst mit den Merkmalen aus den Ansprüchen 1 bzw. 2. Es wird eine ohnehin vorhandene digitale Signalverarbeitungseinrichtung, etwa ein Mikrorechner, dazu benutzt, um eine zur Datenerfassung vorgesehene Schaltungsanordnung vorzugsweise zyklisch von einem Status als Betriebsschaltung in einen anderen Status mit wenigstens einem Testzustand umzukonfigurieren, um daraus ableitbare Signalantworten mittels einer Software-Routine auf Einhaltung vorgebbarer Grenzwerte auf Plausibilität mit erfaßten Betriebswerten zu überprüfen.

Vorteile der Erfindung

Ein erster Vorteil der vorliegenden Erfindung besteht darin, daß die Prüfsignale von einer digitalen Signalverarbeitungseinrichtung über diejenigen Signalwege bzw. Einrichtungen eingeholt werden können, über die die Betriebssignale ohnehin eingeholt werden. Dadurch wird es möglich, Fehler in A/D-Schnittslellen oder Kanalempfänger eines gemultiplexten Betriebs-A/D-Wandlers eines digital wirkenden Steuergerätes einfach zu erkennen.

Ein zweiter Vorteil der erfindungsgemäßen Einrichtung besteht darin, daß auf Fehler in sehr kurzer Zeit geschlossen werden kann. So ist es nicht erforderlich, daß die Stellungsgeber zur Abfrage in einer statischen Ruhelage verharren; vielmehr können diese auch inmitten eines Regelvorganges eine dynamische Lage inne haben. Auf diese Weise können schon nach kürzestmöglicher Zeit nach Auftreten eines Fehlers Failsafe-Routinen aufgerufen werden, die im Fehlerfall die Zurruhesetzung oder einen Notlauf des Fahrzeugs kontrolliert und ohne Einlauf in gefährliche Fahrzustände ermöglichen. Dieser Gesichtspunkt ist von allergrößter Wichtigkeit für die Brauchbarkeit einer voll elektronischen Vortriebssteuerung in einem Kraftfahrzeug.

Als weiterer Vorteil der Erfindung ist anzusehen, daß keinerlei besondere Diskriminatoren erforderlich sind, und die Benützung der zur Betriebssignalverarbeitung ohnehin vorhandenen, hoch auflösenden A/D-Wandler auch für Überwachungsfunktionen zu einer größtmöglichen Einsparung an A/D-Komponenten und damit zusammenhängend auch zu einer Reduzierung von Anschlüssen an einem entsprechenden Steuergerät führt. Dies ist aufgrund des Trends von Bedeutung, solche Steuergeräte für den Einsatz in Kraftfahrzeugen maßlich immer kleiner und zuverlässiger auszuführen und hierzu möglichst viele Komponenten digital zu realisieren und auf einem Chip zusammen mit einem Mikrorechner zu integrieren.

Durch die in den Unteransprüchen aufgeführten Maßnahmen sind vorteilhafte Weiterbildungen der erfindungsgemäßen Überwachungseinrichtung gegeben. Besonders vorteilhaft ist, daß auch die Stromversorgungen der Stellungsgeber auf Fehlerhaftigkeit überwacht werden können.

Zeichnung

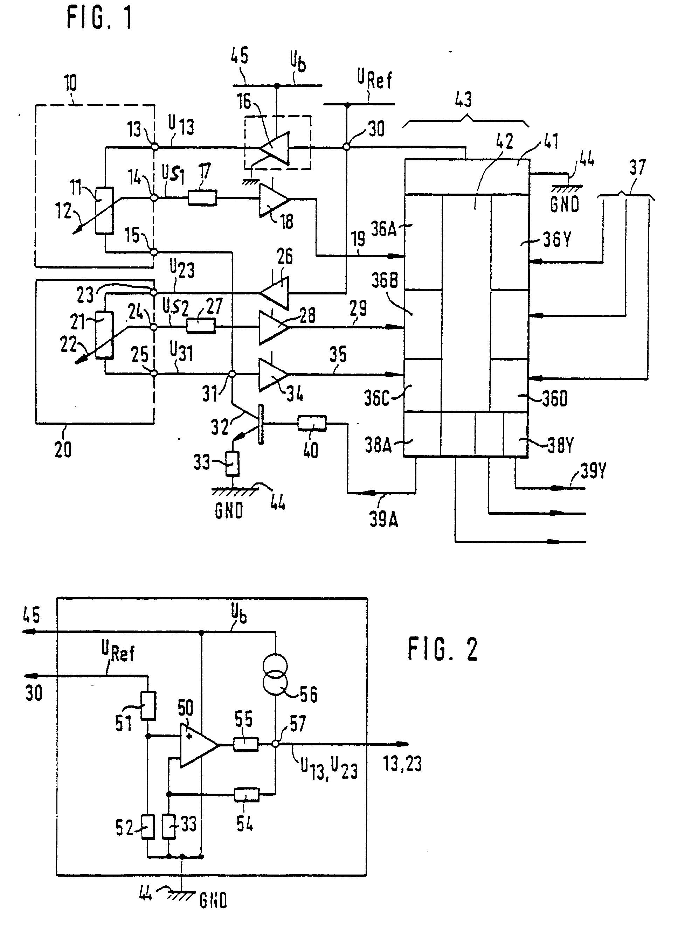

Ausführungsbeispiele der Erfindung sind in der Zeichnung dargestellt und in der nachfolgenden Beschreibung näher erläutert. Es zeigen: Figur 1 ein Prinzipschaltbild einer erfindungsgemäßen Überwachungs- und Schutzvorrichtung und Figur 2 ein Detailschaltbild einer vorteilhaft einsetzbaren Reglereinrichtung zur Versorgung von Stellungsgebern.

Beschreibung des Ausführungsbeispieles

Gemäß Figur 1 umfaßt die erfindungsgemäße Überwachungs- und Schnutzeinrichtung für eine Kraftstoffzumeßeinrichtung in einem Kraftfahrzeug zunächst ein erstes Geberpotentiometer 10 mit Widerstandsbahn 11, einen Schleifabgriff 12, einen Stromversorgungsanschluß 13, einen Abgriffanschluß 14 und einen Massenanschluß 15 und ein zweites Geberpotentiometer 20 mit entsprechenden Bestandteilen 21 bis 25. Das Potentiometer 10 ist als Sollwertgeber mit dem hier nicht gezeichneten Fahrpedal das Kraftahrzeugs gekoppelt, das Potentiometer 20 ist als Istwertgeber verdrehfest an die hier nicht gezeichnete Drosselklappe oder die Regelwelle einer hier nicht gezeichneten Einspritzpumpe angeschlossen.

Ein Knoten 30, der eine Referenzspannung $U_{Ref}$ führt, ist mit dem Eingang eines ersten Versorgungsreglers 16 und eines zweiten Versorgungsreglers 26 sowie mit der Referenzspannungsübergabestufe 41 einer digitalen Signalverarbeitungseinrichtung 43 verbunden. Die Ausgänge der Versorgungsregler 16 und 26 speisen in die Stromversorgungsanschlüsse 13 bzw. 23 des Geberpotentiometers 10 bzw. 20 ein; die Versorgungsregler werden zu diesem Zweck ihrerseits von der Bordnetzschiene 45 versorgt. Die Masseanschlüsse 15 und 25 der Geberpotentiometer 10 und 20 sind auf einen Knoten 31 geführt, von dem aus die Schaltstrecke eines gesteuerten Halbleiterschalters 32 mit nachgeschaltetem Widerstand 33 gegen Masse 44 geschaltet ist. Der Abgriffanschluß 14 des Geberpotentiometers 10 ist über einen Widerstand 17 an einen ersten Anpaßverstärker 18 geführt, der einen definierten Verstärkungsfaktor aufweist. Eine Leitung 19 verbindet seinen Ausgang mit dem Eingang eines ersten A/D-Eingangskanals 36A der digitalen Signalverarbeitungseinrichtung 43. In entsprechender Weise ist der Abgriffanschluß 24 des Geberpotentiometers 20 über einen Widerstand 27 an einen zweiten Anpaßverstärker 28 geführt, der ebenfalls einen definierten Verstärkungsfaktor aufweist. Eine Leitung 29 verbindet seinen Ausgang mit dem Eingang eines zweiten A/D-Eingangskanals 36B, der digitalen Signalverarbeitungseinrichtung 43. Schließlich ist der Knoten 31 noch an einen dritten Anpaßverstärker 34 gefürt, der ebenfalls einen definierten Verstärkungsfaktor aufweist. Eine Leitung 35 verbindet seinen Ausgang mit dem Eingang eines dritten A/D-Eingangskanals 36B der digitalen Signalverarbeitungseinrichtung 43. Die Anpaßverstärker 18, 28 und 34 sind ebenfalls aus der Bordnetzschiene 45 gespeist.

Vorzugsweise sind ihre Verstärkungsfaktoren gleich, was zu einer kostenoptimalen Herstellung beiträgt.

Es sind noch weitere A/D-Eingangskanäle 36D...36Y angedeutet, die über Eingangsleitungen 37 noch andere analoge Fahrzeugdaten einholen können, die bei der Steuerung der Kraftstoffzumeßeinrichtung Berücksichtigung finden sollen.

Der Zuordnung der A/D-Eingangskanäle zum Rechnerkern 42, der üblicherweise wenigstens CPU-, RAM-, ROM-Interrupt- und Timer-Funktionen umfaßt, entspricht die Zuordnung von Ausgangsports 38A bis 38Y, die über Ausgangsleitungen 39A bis 39Y Steuerbefehle abgeben. Beispielsweise können über diese Ausgangsleitungen entweder Steuersignale für einen konventionellen elektromotorischen Steller oder aber mehrphasige Impulsgruppen als Ansteuerimpulsströme für einen Schrittmotor als Stellwerksantrieb abgegeben werden. Der Ausgangs-Port 38A ist—erforderlichenfalls unter Reihenschaltung eines Widerstandes 40—mit der Steuerelektrode des Halbleiterschalters 40 verbunden.

Die Versorgungsregler 16 und 18 sind vorzugsweise gleich und gemäß Figur 2 aufgebaut. Der Pluseingang eines Operationsverstärkers 50 liegt an einem Abgriff eines ersten Spannungsteilers, der von Widerständen 51 und 52 gebildet wird, die zwischen Masse 44 und Referenzspannungsklemme 30 geschaltet sind. Der Minuseingang des Operationsverstärkers 50 ist an den Abgriff eines zweiten Spannungsteilers geführt, der aus Widerständen 53 und 54 gebildet ist und zwischen Masse 44 und den Ausgangsknoten 57 geschaltet ist. Der Operationsverstärker 50 selbst liegt zur Stromversorgung noch an Masse 44 und an der Bordnetzschiene 45. Zwischen den Ausgangsknoten 57 und die Bordnetzschieene 45 ist noch eine Stromquelle 56 geschaltet; der Ausgang des Operationsverstärkers 50 ist schließlich über einen Widerstand 55 mit dem Ausgangsknoten 57 verbunden, von dem aus die Klemme 13 bzw. 23 gemäß der Figur 1 gespeist wird.

Nachfolgend wird zunächst die Funktion der erfindungsgemäßen Einrichtung nach Figur 1 beschrieben.

Die Versorgungsrelger 16 und 26 speisen von der Bordnetzschiene 45 aus die Geberpotentiometer 10 und 20 mit je einer festen Versorgungsspannung $U_{13}$ und $U_{23}$, die in der Regel übereinstimmen. Ferner wird diesem Versorgungsregler auch noch die über den Knoten 30 an der digitalen Signalverarbeitungseinrichtung 43 anstehende Bezugsspannung $U_{Ref}$ zugeführt.

Im zunächst einmal angenommenen Betriebszustand gibt der Ausgangs-Port 38A über den Widerstand 40 ein Steuersignal an den Halbleiterschalter 32 ab, das ihn durchschaltet und somit den Knoten 31 bezüglich seiner Spannung $U_{31}$—sofern der Widerstand 33 lediglich Strombegrenzungsfunktionen erfüllt und deshalb im Verhältnis zu den Bahnwiderständen 11 und 21 niederohmig ist—gegen Masse 44 anähert. Somit stehen die Bahnen 11 und 21 der Geberpotentiometer 10 und 20 unter Betriebsspannung und die

Schleifabgriffsspannungen $U_{S1}$ und $U_{S2}$ liegen ohne bestehenden Fehler sowohl im statischen wie auch dynamischen Reglerzustand zu jeder Betriebszeit immer zwischen den plausiblen Spannungsgrenzwerten $U_{13}$ bzw. $U_{23}$ und $U_{31}$ und bilden die Lage sowohl des Fehrpedals als auch das die Kraftstoffzumeßmenge beeinflussenden Elements eindeutig ab. Dabei können $U_{13}$ und $U_{23}$ entsprechende Werte im Rechner 42 der digitalen Signalverarbeitungseinrichtung 43 durch Programmschrift konstant nachgebildet oder aktuell abgespeichert sein; der Rechner 42 überwacht dabei vorzugsweise ein auf die Referenzspannung $U_{Ref}$ normiertes Plausibilitätsfenster für zulässige Schleifabgriffsspannungen $U_{S1}$ und $U_{S2}$ unter Berücksichtigung der Eingangs/Ausgangs-Übersetzungsfaktoren der Versorgungregler 16 und 26.

Wenn einer der beiden Versorgungsregler 16 und 26 vollkommen ausfällt, ist damit meistens ein interner Kurzschluß zur Bordnetzschiene 45 oder nach Masse 44 verbunden. In jedem Fall erkennt die digitale Signalverarbeitungseinrichtung 43 dann, daß die dem entsprechenden Versorgungsreglerausgang zugeordnete Schleiferabgriffsspannung $U_{S1}$ bzw. $U_{S2}$ außerhalb Plausibilitätsschranken liegt. Der Rechner 42 wertet diese Diskriminanz zu einem Fehlersignal aus.

Eine unplausible Schleifabgriffsspannung $U_{S1}$ bzw. $U_{S2}$ tritt bei intaktem Versorgungsregler 16 bzw. 26 auch dann auf, wenn ein Nebenschluß zur Versorgungsklemme 13 bzw. 23 nach Masse 44 oder zur Bordnetzschiene 45 vorliegt, und der Schleifer 12 bzw. 22 eine gewisse Lage inne hat. Einen entsprechenden Fehler kann der Rechner 42 damit bereits innerhalb der Betriebszeit erkennen und auswerten.

Jeweils nach Ablauf einer gewissen Betriebszeit, in Praxis etwa nach 1...20 ms, wird der Halbleiterschalter 32 über den Ausgangs-Port 38A vom Rechner 42 für die Dauer eines Testintervalls gesperrt. Dadurch fließt in den Bahnen 11 und 21 der Geberpotentiometer 10 und 20 kein Strom mehr, und zwar unter der Voraussetzung, daß keine parasitären Nebenschlüsse vorliegen. Somit wird der Spannungsabfall zwischen Schleifabgriff 14 bzw. 24 und Versorgungsanschluß 13 bzw. 23 des Potentiometers 10 bzw. 20 zu Null, und zwar unabhängig von der augenblicklichen Lage des Schleifers 12 bzw. 22. Damit ist also die Schleifabgriffsspannung $U_{S1}$ bzw. $U_{S2}$ identisch mit der Außenspannung $U_{13}$ bzw. $U_{23}$ des betreffenden Versorgungsreglers 16 bzw. 26.

Sofern die über die Anpaßverstärker 18 und 28 ausgelesenen Schleifabgriffsspannungen $U_{S1}$ und $U_{S2}$ als Maß für die entsprechenden Ausgangsspannungen $U_{13}$ und $U_{23}$ der Versorgungsregler entweder mit einem im Rechner 42 fest einprogrammierten Referenzwert hinreichend genau übereinstimmen oder aber eine Abweichung untereinander haben, die kleiner ist als eine per Programmvorschrift vorgegebene maximale Absolutabweichung, werden diese Schleifabgriffsspannungen vom Rechner 42 als richtig bewertet, d.h. der Rechner 42 erkennt nicht auf einen Stromversorgungsfehler, und gegebenenfalls werden diese an den Schleiferabgriffen aktuell ausgelesenen Ausgangsspannungen der Versorgungsregler 16 und 26 als neue Vergleichsstützwerte für das nächste Test-Intervall in den Rechner 42 eingelesen, normiert und abgespeichert. Fallen entsprechende Vergleichsoperationen negativ aus. erkennt der Rechner 42 auf Fehler und führt den Regelkreis in einen Failsafe-Zustand über, der das Fahrzeug kontrolliert und jedenfalls beherrschbar zur Ruhe bringt.

Liegt jedoch ein Nebenschluß am Schleifabgriff 14 bzw. 24 gegen Masse 44 oder die Bordmeßschiene 45 vor, entspricht während des Testintervalls—also bei geöffnetem Halbleiterschalter 32—die entsprechende Schleifabgriffsspannung $U_{S1}$ bzw. $U_{S2}$ nicht der Ausgangsspannung des Versorgungsreglers 16 bzw. 26. Entsprechende Vergleichsoperationen des Rechners 42 fallen somit negativ aus; insbesondere fallen sie negativ aus für denjenigen möglichen Bereich von Stellungen des Schleifabgriffs 12 bzw. 22, in dem während der Betriebszeit—also bei durchgeschaltetem Halbleiterschalter 32—eine Plausibilitätsprüfung der Schleifabgriffsspannung $U_{S1}$ bzw. $U_{S2}$ nicht negativ ausfällt.

Nicht zur aus Sicherheitsgründen werden die Potentiometer 10 und 20 nicht aus einem einzigen Versorgungsregler, sondern aus in der Regel gleich beschaffenen, doppelt vorhandenen Reglern 10 und 20 versorgt, derart, daß jeder Versorgungsregler zusammen mit dem betreffenden Potentiometer einen besonderen, für sich allein funktionsfähigen Meßkreis bildet. Die Erfindung nutzt weiters die Erkenntnis, daß ein Nebenschluß an zwei räumlich getrennten Potentiometern kaum in gleicher Art und zur gleichen Zeit auftritt, ebensowenig wie zwei Versorgungsregler regelmäßig zur selben Zeit ausfallen. Die Erfindung sieht weiters noch vor, daß die digitale Signalverarbeitungseinrichtung 43 jede Schleifabgriffsspannung in aufeinanderfolgenden Testintervallen abwechselnd einmal mit der im gleichen Meßzweig gemessenen und ein andermal mit der im anderen Meßzweig gemessenen Ausgangsspannung des jeweils betreffenden Versorgungsreglers vergleicht und auf Plausibilität abprüft. Dadurch kann durch Plausibilitätsvergleich der Schleifabgriffsspannung bei geschlossenem Halbleiterschalter 32 und der betreffenden Schleifabgriffsspannung bei geöffnetem Halbleiterschalter 32 unter Bezugnahme auf die gemessene Versorgungsspannung des jeweils anderen Meßkreises nicht nur ein Nebenschlußfehler von einem Deffekt eines Versorgungsreglers unterschieden werden, sondern es kann auch ein fehlerhafter A/D-Eingangskanal erkannt und isoliert werden.

Die Anpaßverstärker 18 und 28 mit entsprechenden Eingangswiderständen 17 und 27 sind für die Funktion der erfindungsgemäßen Einrichtung nicht unbedingt erforderlich, jedoch zweckmäßig, um Meßfehler durch Spannungsabfälle zu verringern und eine erhöhte Störsicherheit der Einrichtung zu erreichen. Da die Ausgangsspan-

4

nung der Versorgungsregler 16 und 26 in etwa gleich der internen Referenzspannung U_Ref der digitalen Signalverarbeitungseinrichtung 43 gemacht werden kann, können die Anpaßverstärker 18 und 28 vorzugsweise eine Verstärkung nahe 1 aufweisen.

Der Anpaßverstärker 34 übersetzt die Spannung $U_{31}$ in einen ditten A/D-Eingangskanal 36C. In Verbindung mit einem geeignet dimensionierten Widerstand 33 ermöglicht er der digitalen Signalverarbeitungseinrichtung 43, zusätzliche Kontrollwerte einzulesen, und zwar sowohl in durchgeschaltetem als auch gesperrtem Zustand des Halbleiterschalters 32, d.h. sowohl im Betriebszustand als auch im Testzustand der Einrichtung. Eine weitere Erhöhung der Betriebssicherheit wird erreicht durch die redundante Überprüfung der Strompfade 16- 13- 11- 15- 31- und 26- 21- 25- 31. Wird einer dieser Pfade z.B. durch den Defekt eines Versorgungsreglers mit Wirkung eines offenen Ausganges oder durch eine Unterbrechung an einem Übergang der Widerstandsbahnen 11 bzw. 21 zu einem Anschluß 13 oder 15 bzw. 23 oder 25 unterbrochen, so sinkt der Strom durch den Widerstand 33 im Betriebszustand der Einrichtung um etwa 50% mit der Wirkung, daß auch die Spannung $U_{31}$ von einem vorgebbaren Vergleichswertebereich signifikant abweicht. Der Rechner 42 wertet diesen vom Anpaßverstärker 34 geeignet übersetzten Spannungsabfall zu einem Fehlersignal aus.

Im Testzustand der Einrichtung, d.h. bei geöffnetem Halbleiterschalter 32 kann die digitale Signalverarbeitungseinrichtung 43 aus der Gleichheit oder Nichtgleichheit der auf den Eingangsleitungen 19, 29 und 35 anstehenden Spannungen auf Fehlerfreiheit oder auf einen Nebenschluß oder einen defekten Versorgungsregler schließen.

Der von der Erfindung mit umfaßte Versorgungsregler 16 bzw. 26 in der Ausführung gemäß der Figur 2 erfüllt die folgende Funktion.

Erstens koppelt er das betreffende Gebepotentiometer 10 bzw. 20 von der mit erheblichen Spannungsschwankungen und Störungen beaufschlagten Bordnetzschiene 45 ab und bildet gegebenenfalls die in der Referenzspannungsübergabestufe 41 einer digitalen Signalverarbeitungseinrichtung 43 on-chip erzeugte Referenzspannung U_Ref am Ausgang des Versorgungsreglers mit erhöhter Strombelastbarkeit nach, ohne daß Kurzschlüsse—z.B. der Klemmen 13 bzw. 23 nach Masse 44 oder der Bordnetzschiene 45—auf die Referenzspannungsübergabestufe 41 zerstörend rückwirken können. Zweitens wird durch geeignete Wahl der spannungsteilenden Widerstände 51, 52, 53 und 54 ein Eingangs/Ausgangsübersetzungsfaktor V<1 für die eingespeiste Referenzspannung U_Ref erreicht; in einer praktischen Realisierung wurde dieser Faktor beispielshaft bei 0,95 festgelegt. Eine gegenüber der Eingangsspannung U_Ref jedenfalls 5 bis 20% kleinere Ausgangsspannung $U_{13}$ bzw. $U_{23}$ der Versorgungsregler 16 und 26 erlaubt eine präzisere Messung der Ausgangsspannungen der Versorgungsregler 16 und 26 über die A/D-Eingangskanäle 36A und 36B aufgrund eines dadurch bedingt höheren Störabstandes.

Die in den Ausgangsknoten 57 einspeisende Stromquelle 56 ermöglicht eine eigensichere Funktion des erfindungsgemäßen Versorgungsreglers bezüglich Kurz- oder Nebenschlüssen an seinem Ausgang, d.h. an der Anschlußklemme 13 bzw. 23 des entsprechenden Potentiometers 10 bzw. 20 ermöglicht die Stromquelle 56, die in den Ausgangsknoten 57 einen Anlaufstrom einspeist. Der Operationsverstärker 50 regelt die Strombilanz am Knoten 57 so, daß an ihm stets die gewünschte Versorgungsspannung $U_{13}$ bzw. $U_{23}$—unabhängig von einer zulässigen Toleranz der Widerstandsbahn 11 bzw. 21 der Potentiometer 10 bzw. 20—ansteht. Der Widerstand 55 verhindert dabei eine Zerstörung des Operationsverstärkers 50, wenn durch Auftreten eines Fehlers der Ausgangsknoten 57 entweder mit Masse 44 oder der Bordnetzschiene 45 verbunden wird.

Die erfindungsgemäße Einrichtung leistet somit durch statischen oder fortlaufend aktualisierten Plausibilitätsvergleich von Meßwerten, die von ein- und derselben Schaltungsanordnung abwechselnd in einen Betriebszustand und in wenigstens einem Testzustand eingeholt werden, eine schnellstmögliche Erkennung von Fehlerzuständen mit hoher Eigensicherheit. Es ist offensichtlich, daß letztere dabei durch Beschränkung auf eine minimale Anzahl solcher Bauelemente erreicht wird, die ausschließlich für die Prüf- und Schutzfunktion zusätzlich notwendig sind.

**Patentansprüche**

1. Überwachungseinrichtung einer elektronischen Steuereinrichtung in einem Kraftfahrzeug, mit wenigstens einem als Sollwert- oder Istwert-Geber ausgebildeten Potentiometer (10, 20), mit einer digitalen Signalverarbeitungseinrichtung (43) zur Steuerung einer Stelleinrichtung, mit wenigstens einem Versorgungsrelger (16, 26), über den dem wenigstens einen Potentiometer (10, 20) eine Versorgungsspannung ($U_{13}$, $U_{14}$) zugeführt wird, mit wenigstens einem Halbleiterschalter (32), über den der durch die Bahn (11, 21) des wenigstens einen Potentiometers (10, 20) fließende Betriebsstrom zugeführt wird und die Masseverbindung des wenigstens einen Potentiometers (10, 20) hergestellt wird, wobei der digitalen Signalverarbeitungseinrichtung (43) das Stellungssignal ($U_{S1}$, $U_{S2}$) vom Schleiferabgriff (14, 24) des wenigstens einen Potentiometers (10, 20) über einen entsprechenden A/D-Eingang (36a bzw. 36b) zur Fehlerauswertung zugeführt wird, wobei der Halbleiterschalter (32) durch die digitale Signalverarbeitungseinrichtung (43) für eine vorgegebene Zeitdauer während eines Betriebszyklus der Brennkraftmaschine vom leitenden in den gesperrten Zustand geschaltet wird und das Stellungssignal ($U_{S1}$, $U_{S2}$) im leitenden und gesperrten Zustand des Halbleiterschalters (32) auf Plausibilität ausgehend von vorgegebenen Grenzwerten überwacht wird.

2. Überwachungseinrichtung einer elektronischen Steuereinrichtung in einem Kraftfahrzeug, mit einem ersten Potentiometer (10) als Sollwert-Geber, mit einem zweiten Potentiometer (20) als Istwert-Geber, mit einer digitalen Signalverarbeitungseinrichtung (43) zur Steuerung einer Stelleinrichtung, mit wenigstens einem Versorgungsregler (16, 26), aus dem den Potentiometern (10, 20) eine Versorgungsspannung ($U_{13}$, $U_{14}$) zugeführt wird, mit wenigstens einem Halbleiterschalter (32), über den der durch die Bahnen (11, 21) der Potentiometer (10, 20) fließende Betriebsstrom zugeführt wird und über den die Masseverbindung der Potentiometer (10, 20) hergestellt wird, wobei der digitalen Signalverarbeitungseinrichtung (43) die Stellungssignale ($U_{S1}$, $U_{S2}$) in den Schleiferabgriffen (14, 24) der Potentiometern (10, 20) über einen entsprechenden ersten und zweiten A/D-Eingang (36a bzw. 36b) zur Fehlerauswertung zugeführt werden, wobei der Halbleiterschalter (32) durch die digitale Signalverarbeitungseinrichtung (43) für eine vorgegebene Zeitdauer während eines Betriebszyklus der Bennkraftmaschine vom leitenden in den gesperrten Zustand geschaltet wird und die Stellungssignale ($U_{S1}$, $U_{S2}$) in leitenden und gesperrten Zustand des Halbleiterschalters (32) auf Plausibilität ausgehend von vorgegebenen Grenzwerten überwacht werden.

3. Einrichtung nach Anspruch 2, dadurch gekennzeichnet, daß dem ersten Potentiometer (10) aus einem ersten Versorgungsregler (16) eine erste Versorgungsspannung ($U_{13}$) und dem zweiten Potentiometer (20) aus einem zweiten Versorgungsregler (26) eine zweite Versorgungsspannung ($U_{23}$) zuführbar ist.

4. Einrichtung nach Anspruch 2 oder 3, dadurch gekennzeichnet, daß in der digitalen Signalverarbeitungseinrichtung (43) bei durchgeschaltetem Halbleiterschalter (32) in ersten Zeiträumen Abgriffpotentiale ($U_{S1}$, $U_{S2}$) an Potentiometern (10, 20) mit je einem festlegbaren unteren und einem festlegbaren oberen Grenzwert vergleichbar sind und daß in der digitalen Signalverarbeitungseinrichtung (43) bei geöffnetem Halbleiterschalter (32) in zweiten Zeiträumen Abgriffpotentiale ($U_{S1}$, $U_{S2}$) auf Übereinstimmung innerhalb vorgebbarer Grenzwerte mit wenigstens einer sie verursachenden Versorgungsspannung ($U_{13}$, $U_{23}$) vergleichbar sind und daß die Lage wenigstens einer dieser Spannungen außerhalb vorgebbarer Grenzwerte in der digitalen Signalverarbeitungseinrichtung (43) zur Erkennung und Auswertung eines Fehlerzustandes führt.

5. Einrichtung nach Anspruch 4, dadurch gekennzeichnet, daß untere und obere Grenzwerte dadurch festlegbar sind, daß in der digitalen Signalverarbeitungseinrichtung (43) entsprechende Werte fest abspeicherbar sind.

6. Einrichtung nach Anspruch 4, dadurch gekennzeichnet, daß untere und obere Grenzwerte dadurch festlegbar sind, daß in der digitalen Signalverarbeitungseinrichtung (43) sukzessive entsprechende Werte abspeicherbar sind, die jeweils wenigstens einem Abgriffpotential ($U_{S1}$,

$U_{S2}$) der Potentiometer (10, 20) in zweiten Zeiträumen entsprechen.

7. Einrichtung nach Anspruch 6, dadurch gekennzeichnet, daß in der digitalen Signalverarbeitungseinrichtung (43) in aufeinanderfolgenden zweiten Zeiträumen das Abgriffpotential ($U_{S1}$ bzw. $U_{S2}$) am Potentiometer (10 bzw. 20) abwechselnd mit dem in einem vorgangegangenen zweiten Zeitraum abgespeicherten Abgriffpotential ($U_{S1}$ bzw. $U_{S2}$) am Potentiometer (10 bzw. 20) und mit dem in einem vorangegangenen zweiten Zeitraum abgespeicherten Abgriffpotential ($U_{S2}$ bzw. $U_{S1}$) am Potentiometer (20 bzw. 10) vergleichbar ist.

8. Einrichtung nach Anspruch 2, dadurch gekennzeichnet, daß der Betriebsstrom durch die Bahnen (11, 21) der Potentiometer (10, 20) über einen mit dem Halbleiterschalter (32) in Serie geschalteten Widerstand (33) führbar ist, und daß die an diesem Widerstand (33) und dem Halbleiterschalter (32) abfallende Spannung ($U_{31}$) einem dritten A/D-Kanal (38C) der digitalen Signalverarbeitungseinrichtung (43) zuführbar ist.

9. Einrichtung nach Anspruch 8, dadurch gekennzeichnet, daß in der digitalen Signalverarbeitungseinrichtung (43), bei durchgeschaltetem Halbleiterschalter (32) in ersten Zeiträumen ein den Spannungsabfall ($U_{31}$) charakterisierender Wert mit einem fest abgespeicherten Wert auf Übereinstimmung innerhalb vorgebbarer Schranken überprüfbar ist und daß bei geöffnetem/ gesperrtem Halbleiterschalter (32) in zweiten Zeiträumen der Spannungsabfall ($U_{31}$) auf Übereinstimmung innerhalb vorgebbarer Schranken mit Abgriffpotentialen ($U_{S1}$, $U_{S2}$ überprüfbar ist und daß die Lage wenigstens einer dieser Spannungen außerhalb vorgebbarer Schranken in der digitalen Signalverarbeitungseinrichtung (43) zur Erkennung und Auswertung eines Fehlerzustandes führt.

10. Einrichtung nach einem der vorangehenden Ansprüche, dadurch gekennzeichnet, daß die Abgriffpotentiale ($U_{S1}$, $U_{S2}$) und/oder der Spannungsabfall ($U_{31}$) der digitalen Signalverarbeitungseinrichtung (43) über Anpaßverstärker (18, 28, 34) zuführbar sind.

11. Einrichtung nach Anspruch 2, dadurch gekennzeichnet, daß der wenigstens eine Versorgungsregler (16, 26) als Verstärker mit einem Verstärkungsfaktor V<1 ausgeführt ist, daß ihm eingangsseitig eine Referenzsspannung ($U_{Ref}$) der digitalen Signalverarbeitungseinrichtung (43) zuführbar ist und daß zwischen des Ausgang des Verstärkers und die Betriebsspannung des Verstärkers jedenfalls eine Stromquelle (56) geschaltet ist.

## Revendications

1. Dispositif de surveillance pour une installation de commande électronique dans un véhicule automobile, avec au moins un potentiomètre (10, 20) réalisé sous la forme d'un transmetteur de valeur de consigne ou de valeur réelle, avec un dispositif de traitement numérique des signaux (43) servant à commander un dispositif de réglage, avec un moins un régulateur d'alimentation (16, 26), par l'intermédiaire duquel une tension d'alimentation ($U_{13}$, $U_{14}$) est amenée à au moins un potentiomètre, avec au moins un interrupteur à semi-conducteur (32), par l'intermédiaire duquel le courant de fonctionnement qui s'écoule est amené par la piste (11, 21) d'au moins un potentiomètre (10, 20) et par l'intermédiaire duquel est établie la liaison à la masse d'au moins un potentiomètre (10, 20), le signal de réglage ($U_{S1}$, $U_{S2}$) de la prise de curseur (14, 24) d'au moins un potentiomètre (10, 20) étant amené au dispositif de traitement numérique des signaux (43) par l'intermédiaire d'une entrée analogique/numérique (36a ou 36b) correspondante, en vue de l'évaluation des défauts, l'interrupteur à semi-conducteur (32) étant commuté pendant une durée prédéterminée de l'état passant à l'état bloqué, pendant un cycle de fonctionnement du moteur à combustion interne, et le signal de réglage ($U_{S1}$, $U_{S2}$) est surveillé, à l'état passant et à l'état bloqué de l'interrupteur à semi-conducteur (32), à partir de valeurs limites prédéterminées possibles.

2. Dispositif de surveillance pour une installation de commande électronique dans un véhicule automobile, avec un premier potentiomètre (10) en tant que transmetteur de valeur de consigne, avec un deuxième potentiomètre (20) en tant que transmetteur de valeur réelle, avec un dispositif de traitement numérique des signaux (43) servant à commander un dispositif de réglage, avec au moins un régulateur d'alimentation (16, 26), à partir duquel une tension d'alimentation ($U_{13}$, $U_{14}$) est amenée aux potentiomètres (10, 20), avec au moins un interrupteur à semiconducteur (32), par l'intermédiaire duquel le courant de fonctionnement qui s'écoule est amené par les pistes (11, 21) des potentiomètres (10, 20) et par l'intermédiaire quel est établie la liaison à la masse des potentiomètres (10, 20), les signaux de réglage ($U_{S1}$, $U_{S2}$) des prises de curseur (14, 24) des potentiomètres (10, 20) étant amenés au dispositif de traitement numérique des signaux (43) par l'intermédiaire d'une première et d'une deuxième entrée analogique/numérique (36a ou 36b) correspondante, en vue de l'évaluation des défauts, l'interrupteur à semi-conducteur (32) étant commuté pendant une durée prédéterminée de l'état passant à l'état bloqué, pendant un cycle de fonctionnement du moteur à combustion interne, et la vraisemblance des signaux de réglage ($U_{S1}$, $U_{S2}$) étant surveillée, à l'état passant et à l'état bloqué de l'interrupteur à semi-conducteur (32), à partir de valeurs limites prédéterminées.

3. Dispositif selon la revendication 2, caractérisé en ce qu'une première tension d'alimentation ($U_{13}$) est amenée au premier potentiomètre (10) à partir d'un premier régulateur d'alimentation (16) et qu'une deuxième tension d'alimentation ($U_{23}$) est amenée au deuxième potentiomètre (20) à partir d'un deuxième régulateur d'alimentation (26).

4. Dispositif selon la revendication 2 ou 3, caractérisé en ce que, dans le dispositif de traitement numérique des signaux (43), lorsque l'interrupteur à semi-conducteur (32) est fermé pendant des premières périodes, des potentiels de prélèvement ($U_{S1}$, $U_{S2}$) sont chacun comparables sur des potentiomètres (10, 20) avec une valeur limite inférieure déterminable et avec une valeur limite supérieure déterminable, et en ce que, dans le dispositif de traitement numérique des signaux (43), lorsque l'interrupteur à semi-conducteur (32) est ouvert pendant des deuxièmes périodes, ou peut comparer la coïncidence des potentiels de prélèvement ($U_{S1}$, $U_{S2}$) avec au moins une tension d'alimentation ($U_{13}$, $U_{14}$) les provoquant, entre des valeurs limites prédéterminées, et en ce que la situation d'au moins l'une de ces tensions à l'extérieur des valeurs limites prédéterminées dans le dispositif de traitement numérique des signaux (43) mène à l'identification et à l'évaluation d'un état défectueux.

5. Dispositif selon la revendication 4, caractérisé en ce que les valeurs limites inférieure et supérieure peuvent être fixées par le fait que des valeurs correspondantes fixes sont susceptibles d'être mises en mémoire dans le dispositif de traitement numérique des signaux (43).

6. Dispositif selon la revendication 4, caractérisé en ce que les valeurs limites inférieure et supérieure peuvent être fixées par le fait que des valeurs correspondantes successives sont susceptibles d'être mises en mémoire dans le dispositif de traitement numérique des signaux (43), valeurs correspondant chacune au moins à un potentiel de prélèvement ($U_{S1}$, $U_{S2}$) des potentiomètres (10, 20) dans les deuxièmes périodes.

7. Dispositif selon la revendication 6, caractérisé en ce que, dans le dispositif de traitement numérique des signaux (43), dans des deuxièmes périodes successives, le potentiel de prélèvement ($U_{S1}$ ou $U_{S2}$) est comparable en alternance, sur le potentiomètre (10 ou 20), avec le potentiel de prélèvement ($U_{S1}$ ou $U_{S2}$) mis en mémoire lors d'une deuxième période précédente, et comparable, sur le potentiomètre (20 ou 10), avec le potentiel de prélèvement ($U_{S2}$ ou $U_{S1}$) mis en mémoire lors d'une deuxième période précédente.

8. Dispositif selon la revendication 2, caractérisé en ce que le courant de fonctionnement passant par les pistes (11, 21) peut être amené aux potentiomètres (10, 20) par l'intermédiaire d'une résistance (33) montée en série avec l'interrupteur à semi-conducteur (32), et en ce que la chute de tension ($U_{31}$) produite sur cette résistance (33) et sur l'interrupteur à semi-conducteur (32) peut être amenée à un troisième canal analogique/numérique (36C) du dispositif de traitement numérique des signaux (43).

9. Dispositif selon la revendication 8, caractérisé en ce que dans le dispositif de traitement numérique des signaux (43), lorsque l'interrupteur à semi-conducteur (32) est fermé, on peut contrôler dans des premières périodes la coïncidence, dans des limites prédéterminées, d'une valeur caractérisant la chute de tension ($U_{31}$) avec

une valeur fixe mise en mémoire et en ce que, lorsque l'interrupteur à semi-conducteur (32) est ouvert/bloqué, on peut contrôler dans des deuxièmes périodes la coïncidence, dans des limites prédéterminées, de la chute de tension ($U_{31}$) avec les potentiels de prélèvement ($U_{S1}$, $U_{S2}$), et en ce que la situation d'au moins l'une de ces tensions à l'extérieur des limites prédéterminées dans le dispositif de traitement numérique des signaux (43) mène à l'identification et à l'évaluation d'un état défectueux.

10. Dispositif selon l'une des revendications précédentes, caractérisé en ce que les potentiels de prélèvement ($U_{S1}$, $U_{S2}$) et/ou la chute de tension ($U_{31}$) peuvent être amenés au dispositif de traitement numérique des signaux (43) par l'intermédiaire d'amplificateurs d'adaptation (18, 28, 34).

11. Dispositif selon la revendication 2, caractérisé en ce que, au moins un régulateur d'alimentation (16, 26) est réalisé sous la forme d'un amplificateur avec un facteur d'amplification V<1, en ce que du côté entrée une tension de référence ($U_{Ref}$) peut être amenée au dispositif de traitement numérique des signaux (43) et en ce qu'une source de courant (56) est en tous cas connectée entre la sortie de l'amplificateur et la tension de fonctionnement de l'amplificateur.

**Claims**

1. Monitoring device of an electronic control device in a motor vehicle, having at least one potentiometer (10, 20), constructed as a rated value or actual value sensor, having a digital signal processing device (43) for controlling a regulating device, having at least one supply control (16, 26), via which a supply voltage ($U_{13}$, $U_{14}$) is fed to the at least one potentiometer (10, 20), having at least one semiconductor switch (32) via which the operating current flowing through the path (11, 21) of the at least one potentiometer (10, 20) is fed and the earth line of the at least one potentiometer (10, 20) is produced, the position signal ($U_{S1}$, $U_{S2}$) from the slider tap (14, 24) of the at least one potentiometer (10, 20) being fed to the digital signal processing device (43) via a corresponding A-D input (36a and 36b) for the purpose of evaluating errors, the semiconductor switch (32) being switched by the digital signal processing device (43) during an operating cycle of the internal combustion engine for a predetermined time period from the conducting to the blocked state and the position signal ($U_{S1}$, $U_{S2}$) being monitored in the conducting and blocked state of the semiconductor switch (32) for plausibility on the basis of the predetermined threshold values.

2. Monitoring device of an electronic control device in a motor vehicle, having a first potentiometer (10) as rated value sensor, having a second potentiometer (20) as actual value sensor, having a digital signal processing device (43) for controlling a regulating device, having at least one supply control (16, 26), from which a supply voltage ($U_{13}$, $U_{14}$) is fed to the potentiometers (10, 20) having at least one semiconductor switch (32) via which the operating current through the parts (11, 21) of the potentiometers (10, 20) is fed and via which the earth line of the potentiometers (10, 20) is produced, the position signals ($U_{S1}$, $U_{S2}$) in the slider taps (14, 24) of the potentiometers (10, 20) being fed to the digital signal processing device (43) via a corresponding first and second A-D input (36a and 36b) for the purpose of evaluating errors, the semiconductor switch (32) being switched by the digital signal processing device (43) for a predetermined time period during an operating cycle of the internal combustion engine from the conducting to the blocked state and the position signals ($U_{S1}$, $U_{S2}$) being monitored in the conducting and blocked state of the semiconductor switch (32) for plausibility on the basis of the predetermined threshold values.

3. Device according to Claim 2, characterized in that a first supply voltage ($U_{13}$) can be fed to the first potentiometer (10) from a first supply control (16) and a second supply voltage ($U_{23}$) can be fed to the second potentiometer (20) from a second supply control (26).

4. Device according to Claim 2 or 3, characterized in that in the digital signal processing device (43) with a semiconductor switch (32) switched through, tap potentials ($U_{S1}$, $U_{S2}$) can be compared in first time periods at potentiometers (10, 20) to in each case one definable lower and one definable higher threshold value, and in that in the digital signal processing device (43) with the semiconductor switch (32) opened, tap potentials ($U_{S1}$, $U_{S2}$) can be compared in second time periods for correspondance within predeterminable threshold values with at least one supply voltage ($U_{13}$, $U_{23}$) causing them, and in that the position of at least one of these voltages outside predeterminable threshold values leads in the digital signal processing device (43) to the detection and evaluation of an error condition.

5. Device according to Claim 4, characterized in that upper and lower threshold values can be defined due to the fact that corresponding values can be permanently stored in the digital signal processing device (43).

6. Device according to Claim 4, characterized in that lower and upper threshold values can be defined due to the fact that successive corresponding values can be stored in the digital signal processing device (43), said values corresponding in each case to at least one tap potential ($U_{S1}$, $U_{S2}$) of the potentiometers (10, 20) in second time periods.

7. Device according to Claim 6, characterized in that in the digital signal processing device (43) the tap potential ($U_{S1}$ and $U_{S2}$) at the potentiometer (10 and 20) can be compared in successive second time periods alternately with the tap potential ($U_{S1}$ and $U_{S2}$), stored in a previous second time period, at the potentiometer (10 and 20) and with the tap potential ($U_{S2}$ and $U_{S1}$), stored in a previous second time period, at the potentiometer (20 and 10).

8

8. Device according to Claim 2, characterized in that the operating current can be led through the paths (11, 21) of the potentiometers (10, 20), via a resistor (33) connected in series to the semiconductor switch (32), and in that the voltage ($U_{31}$) dropping at this resistor (33) and at the semiconductor switch (32) can be fed to a third A-D channel (38C) of the digital signal processing device (43).

9. Device according to Claim 8, characterized in that in the digital signal processing device (43) with the semiconductor switch (32) switched through, a value characterizing the voltage drop ($U_{31}$) can be tested in first time periods with a permanently stored value for correspondance within predeterminable limits and in that with the semiconductor switch (32) opened/blocked the voltage drop ($U_{31}$) can be tested in second time periods for correspondance with tap potentials ($U_{S1}$, $U_{S2}$) within predeterminable limits, and in that the position of at least one of these voltages outside predeterminable limits leads in the digital signal processing device (43) to the detection and evaluation of an error condition.

10. Device according to one of the preceding claims, characterized in that the tap potentials ($U_{S1}$, $U_{S2}$) and/or the voltage drop ($U_{31}$) can be fed to the digital signal processing device (43) via matching amplifiers (18, 28, 34).

11. Device according to Claim 2, characterized in that the at least one supply control (16, 26) is constructed as an amplifier with an amplification factor $V < 1$, in that a reference voltage ($U_{Ref}$) of the digital signal processing device (43) can be fed to it on the input side, and in that in every case a current source (56) is connected between the output of the amplifier and the operating voltage of the amplifier.

FIG. 1

FIG. 2